# EUROPÄISCHE PATENTANMELDUNG

(11) **EP 2 634 888 A2**
(43) Veröffentlichungstag der Anmeldung: **04.09.2013**
(21) Anmeldenummer: 13157118.4
(22) Anmeldetag: 28.02.2013
(51) Int. Cl.: H02J 3/38, H02J 13/00, H02M 7/493

(54) **PV-Wechselrichter, NA-Schutz und PV-System**

(30) Priorität: 28.02.2012 DE 102012203006
(71) Anmelder: KACO new energy GmbH, 74172 Neckarsulm (DE)
(72) Erfinder: Schaupp, Thomas, 74821 Mosbach (DE); Eder, Phillip, 74613 Öhringen (DE); Kittel, Thomas, 74189 Weinsberg (DE)
(74) Vertreter: Patentanwälte Ruff, Wilhelm, Beier, Dauster & Partner

(57) **Zusammenfassung**

Ein Photovoltaik(PV)-Wechselrichter (1a, 1b) umfasst: einen internen Kuppelschalter (2a, 2b) zur Netzabschaltung, einen Steuer-Eingang (3a, 3b) zum Koppeln mit einem korrespondierenden Steuer-Ausgang (6) eines vom PV-Wechselrichter getrennten externen Kuppelschalter-losen Netz- und Anlagen(NA)-Schutzes (5) und eine Fehlersignal-Auswerteeinheit (4a, 4b), die ein am Steuer-Eingang anstehendes Signal (S) zur Fehlerbestimmung auswertet, wobei ein fehlerfreier Zustand bestimmt wird, wenn das Signal einen vorgegebenen zeitlichen Verlauf aufweist, und ein fehlerhafter Zustand bestimmt wird, wenn das Signal von dem vorgegebenen zeitlichen Verlauf abweicht.

## Beschreibung

Die Erfindung betrifft einen Photovoltaik(PV)-Wechselrichter, einen Kuppelschalter-losen externen Netz- und Anlagen(NA)-Schutz und ein PV-System.

Ein NA-Schutz hat die Aufgabe, eine Erzeugungsanlage, beispielsweise in Form eines PV-Wechselrichters, bei unzulässigen Spannungs- und Frequenzwerten vom Netz abzuschalten (siehe auch DIN VDE 0100-551, Kapitel 7.2). Damit soll eine ungewollte Einspeisung der Erzeugungsanlage in einen vom übrigen Verteilungsnetz getrennten Netzteil sowie die Speisung von Fehlern in diesem Netz verhindert werden.

Gemäß VDE-AR-N 4105 ist bei der Verwendung eines externen NA-Schutzes nicht zwangsläufig auch ein externer Kuppelschalter notwendig. Wenn sichergestellt werden kann, dass eine Auslösekette schnell genug abschalten kann, können beispielsweise auch ggf. vorhandene interne Kuppelschalter eines Wechselrichters verwendet werden.

Der Erfindung liegt die Aufgabe zugrunde, einen Photovoltaik(PV)-Wechselrichter, einen Kuppelschalter-losen externen Netz- und Anlagen(NA)-Schutz und ein PV-System zur Verfügung zu stellen, die einen zuverlässigen Betrieb eines PV-Systems ermöglichen und die insbesondere eine Manipulation des NA-Schutz zuverlässig verhindern.

Die Erfindung löst diese Aufgabe durch einen PV-Wechselrichter nach Anspruch 1, einen Kuppelschalter-losen externen NA-Schutz nach Anspruch 4 und ein PV-System nach Anspruch 6.

Bevorzugte Ausführungsformen sind Gegenstand der Unteransprüche, deren Wortlaut hiermit durch Bezugnahme zum Inhalt der Beschreibung gemacht wird.

Die erfindungsgemäße Erzeugungsanlage, insbesondere in Form eines Photovoltaik(PV)-Wechselrichters, weist einen, insbesondere ansteuerbaren, internen Kuppelschalter zur ansteuerungsabhängigen Netzabschaltung auf. Der Kuppelschalter kann beispielsweise zwei in Reihe geschaltete Schalteinrichtungen umfassen. Die Schalteinrichtungen des Kuppelschalters können als galvanische Schalteinrichtungen ausgeführt sein, beispielsweise als ansteuerbare Leistungsrelais. Der PV-Wechselrichter umfasst weiter einen Steuer-Eingang zum Koppeln mit einem korrespondierenden Steuer-Ausgang eines vom PV-Wechselrichter getrennten externen Kuppelschalter-losen Netz- und Anlagen(NA)-Schutzes. Eine Fehlersignal-Auswerteeinheit des PV-Wechselrichters, beispielsweise in Form eine Mikrokontrollers, ist dazu ausgebildet, ein am Steuer-Eingang anstehendes Signal zur Fehlerbestimmung auszuwerten, wobei die Fehlersignal-Auswerteeinheit einen fehlerfreien Zustand bestimmt, wenn das Signal einen vorgegebenen zeitlichen Verlauf aufweist, und die Fehlersignal-Auswerteeinheit einen fehlerhaften Zustand bestimmt, wenn das Signal von dem vorgegebenen zeitlichen Verlauf abweicht.

Die Fehlersignal-Auswerteeinheit und der interne Kuppelschalter können in Wirkverbindung stehen, d.h. die Fehlersignal-Auswerteeinheit kann den internen Kuppelschalter in Abhängigkeit davon ansteuern, ob die Fehlersignal-Auswerteeinheit einen fehlerfreien oder einen fehlerhaften Zustand bestimmt. Es besteht alternativ selbstverständlich auch die Möglichkeit, dass die Erzeugungsanlage eine zentrale Steuereinheit aufweist, die sowohl mit der Fehlersignal-Auswerteeinheit als auch mit dem internen Kuppelschalter in Wirkverbindung steht, wobei die Fehlersignal-Auswerteeinheit das Ergebnis der Bestimmung des fehlerfreien bzw. fehlerhaften Zustands der zentralen Steuereinheit mittelt, wobei die zentrale Steuereinheit in Abhängigkeit vom mittgeteilten Zustand den internen Kuppelschalter ansteuert.

Erfindungsgemäß wird ein fehlerfreier Zustand mittels eines vorgegebenen, dem PV-Wechselrichter und dem NA-Schutz bekannten Signalverlaufs signalisiert. Dies verhindert beispielsweise, dass im Zuge einer Manipulation mittels einer einfachen Batterie, die einen vorgegebenen DC-Pegel erzeugt, fälschlicherweise ein fehlerfreier Zustand signalisiert wird.

Der interne Kuppelschalter kann im fehlerhaften Zustand eine Netzabschaltung bewirken. Hierzu kann beispielsweise die Fehlersignal-Auswerteeinheit oder die zentrale Steuereinheit den internen Kuppelschalter geeignet ansteuern.

Die Fehlersignal-Auswerteeinheit kann dazu ausgebildet sein, das am Steuer-Eingang anstehende Signal zur Detektion des Vorhandenseins des externen NA-Schutzes auszuwerten, wobei das Vorhandensein des externen NA-Schutzes detektiert wird, wenn das Signal den vorgegebenen zeitlichen Verlauf aufweist. Auf diese Weise kann der PV-Wechselrichter automatisch erkennen, ob ein korrespondierender externer NA-Schutz vorhanden ist, der den entsprechenden Betriebsmodus unterstützt. Wenn kein externer NA-Schutz mit entsprechender Signalausgabe detektiert wird, kann der PV-Wechselrichter in einem Standard-Modus betrieben werden, bei dem beispielsweise ein autarker, externer NA-Schutz mit externem Kuppelschalter verwendet wird.

Der Kuppelschalter-lose externe NA-Schutz weist einen Steuer-Ausgang zum Koppeln mit einem korrespondierenden Steuer-Eingang eines vom NA-Schutz getrennten PV-Wechselrichters auf, wobei der NA-Schutz dazu ausgebildet ist, am Steuer-Ausgang ein Signal auszugeben, das einen Fehler-Zustand kodiert. In einem fehlerfreien Zustand weist das Signal einen vorgegebenen zeitlichen Verlauf auf und in einem fehlerhaften Zustand weist das Signal einen zeitlichen Verlauf auf, der von dem vorgegebenen zeitlichen Verlauf abweicht.

Während des vorgegebenen zeitlichen Verlaufs für den fehlerfreien Zustand kann das Signal abwechselnd einen High-Pegel und einen Low-Pegel aufweisen. Im einfachsten Fall ist das Signal für den fehlerfreien Zustand ein PWM-Signal mit festem bzw. vorgegebenem Tastverhältnis.

Das Photovoltaik(PV)-System weist einen oben genannten PV-Wechselrichter und einen oben genannten vom PV-Wechselrichter getrennten externen Kuppelschalter-losen NA-Schutz auf.

Die Erfindung wird nachfolgend unter Bezugnahme auf die Zeichnungen beschrieben. Hierbei zeigt schematisch:
- Fig.1: eine Photovoltaik(PV)-Anlage mit zwei PV-Wechselrichtern und einem zugehörigen externen Netz- und Anlagen(NA)-Schutz und
- Fig. 2: einen zeitlichen Verlauf eines vom NA-Schutz aus Fig. 1 erzeugten Signals für einen fehlerfreien und einen fehlerhaften Zustand.

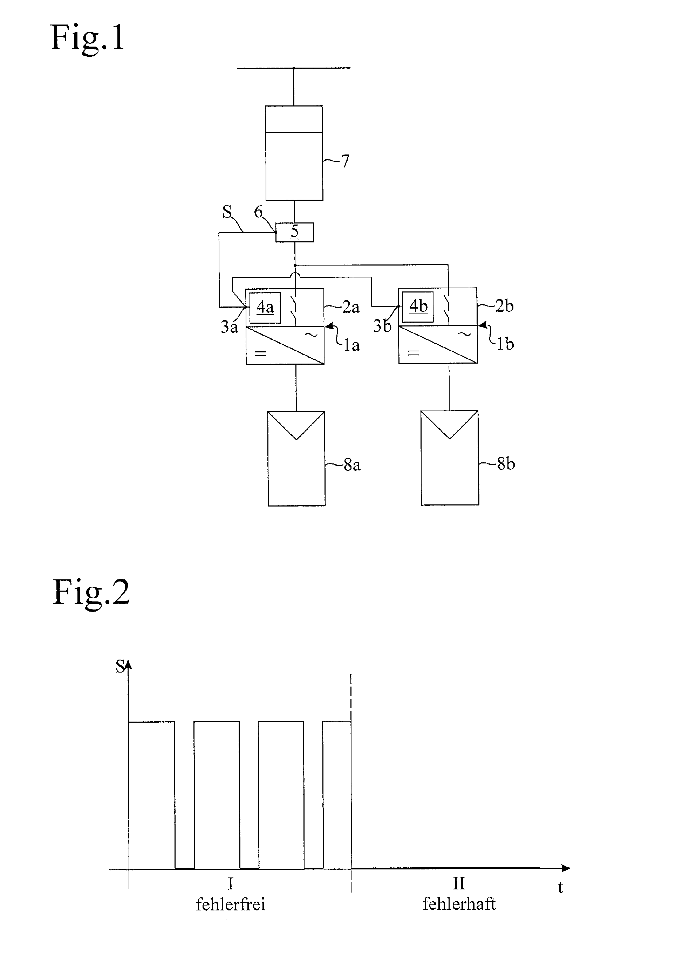

Fig. 1 zeigt eine Photovoltaik(PV)-Anlage mit zwei herkömmlichen PV-Generatoren 8a und 8b, zwei PV-Wechselrichtern 1a und 1 b, die mit den PV-Generatoren 8a und 8b gekoppelt sind, einem zentralen NA-Schutz 5, der mit den PV-Wechselrichtern 1a und 1b gekoppelt ist, und einem Zähler 7, der mit dem NA-Schutz 5 und mit einem Wechselspannungsnetz gekoppelt ist.

Die PV-Wechselrichter 1a und 1b weisen einen internen Kuppelschalter 2a bzw. 2b zur Netzabschaltung mit zwei internen, in Reihe geschalteten Schalteinrichtungen auf. Die Schalteinrichtungen können als galvanische Schalteinrichtungen ausgeführt sein, beispielsweise als Motorschutzschalter, mechanischer Leistungsschalter, usw.

Die PV-Wechselrichter 1a und 1b weisen weiter einen Steuer-Eingang 3a bzw. 3b zum Koppeln mit einem korrespondierenden Steuer-Ausgang 6 des NA-Schutzes 5 und eine Fehlersignal-Auswerteeinheit 4a bzw. 4b auf, die ein an dem Steuer-Eingang 3a bzw. 3b anstehendes Signal S zur Fehlerbestimmung auswerten.

Der NA-Schutz 5 überwacht herkömmlich unterschiedliche Betriebsparameter. Insoweit sei auch auf die einschlägigen Normen verwiesen. Der NA-Schutz 5 gibt an seinem Steuer-Ausgang 6 das Signal S aus, das einen Fehler-Zustand bzw. Betriebs-Zustand kodiert

Bezugnehmend auf Fig. 2 gibt der NA-Schutz 5 an seinem Steuer-Ausgang 6 während eines fehlerfreien Zustands das Signal S mit einem vorgegebenen zeitlichen Verlauf in Form eines periodischen pulsweitenmodulierten Signals aus, siehe Zeitabschnitt I. Während eines fehlerhaften Zustands, d.h. wenn der NA-Schutz einen Fehler detektiert, weist das Signal S einen zeitlichen Verlauf auf, der von dem vorgegebenen zeitlichen Verlauf abweicht, siehe Zeitabschnitt II. Beispielhaft wird hier ein konstanter Low-Pegel ausgegeben.

Die Fehlersignal-Auswerteeinheit 4a bzw. 4b der PV-Wechselrichter 1a bzw. 1 b wertet das Signal S zur internen Fehlerbestimmung aus, wobei ein fehlerfreier Zustand bestimmt wird, wenn das Signal den im Zeitabschnitt I gezeigten vorgegebenen zeitlichen Verlauf aufweist, und ein fehlerhafter Zustand bestimmt wird, wenn das Signal S von dem vorgegebenen zeitlichen Verlauf abweicht.

Der Kuppelschalter 2a bzw. 2b bewirkt im fehlerhaften Zustand eine Netzabschaltung der PV-Wechselrichter 1a bzw. 1b. Hierzu kann beispielsweise der Kuppelschalter 2a bzw. 2b von der Fehlersignal-Auswerteeinheit 4a bzw. 4b derart angesteuert werden, dass der Kuppelschalter 2a bzw. 2b öffnet.

Die Fehlersignal-Auswerteeinheit 4a bzw. 4b kann das am Steuer-Eingang 3a bzw. 3b anstehende Signal S auch zur Detektion des Vorhandenseins des externen NA-Schutzes 5 auswerten, wobei das Vorhandensein des externen NA-Schutzes 5 detektiert wird, wenn das Signal S den vorgegebenen zeitlichen Verlauf aufweist, siehe Zeitabschnitt I. Auf diese Weise kann automatisch zwischen einem herkömmlichen Modus, bei dem das Signal S nicht durch den NA-Schutz 5 erzeugt wird, und dem erfindungsgemäßen Modus unterschieden werden.

Erfindungsgemäß stellt der zentrale NA-Schutz 5 ein Spannungssignal S zur Verfügung, das von den PV-Wechselrichtern 1a und 1b gemessen wird. Beim NA-Schutz 5 und den PV-Wechselrichtern 1a und 1b liegt jeweils eine identische Definition der Stati für Netz-OK und Netz-Fehler vor. Dabei wird auf Grund der geforderten Einfehler-Sicherheit ein Signal mit abwechselnd High-Pegel und Low-Pegel für den Status Netz-OK verwendet, um bei Kabelbruch in einen sicheren Zustand zu gelangen. Zur Verhinderung von Manipulation durch Anbringen einer KonstantSpannungsquelle wird im Status Netz-OK in festgelegter zeitlicher Abfolge das Spannungs-Signal S mit einem Low-Pegel erzeugt. Die zeitliche Abfolge der Low- und High-Pegel ist im Sender 5 und Empfänger 1a bzw. 1b identisch definiert. Die Dauer des Low-Pegels muss dabei lang genug gewählt werden, damit bei gegebener Leitungsimpedanz jeder Empfänger 1 a bzw. 1 b den Low-Pegel erkennen kann, darf aber nicht zu lange gewählt werden, da die Dauer des Low-Pegels oder Low-Impulses als Verzögerungszeit für die Erkennung eines Netz-Fehler-Status wirkt. Die genaue Ausgestaltung der zeitlichen Abfolge ist dabei unerheblich, solange sie nur einem festgelegten Muster folgt.

## Patentansprüche

1. Photovoltaik(PV)-Wechselrichter (1a, 1 b), aufweisend:
- einen internen Kuppelschalter (2a, 2b) zur Netzabschaltung und
- einen Steuer-Eingang (3a, 3b) zum Koppeln mit einem korrespondierenden Steuer-Ausgang (6) eines vom PV-Wechselrichter getrennten externen Kuppelschalter-losen Netz- und Anlagen(NA)-Schutzes (5),
**gekennzeichnet durch**
- eine Fehlersignal-Auswerteeinheit (4a, 4b), die ein am Steuer-Eingang anstehendes Signal (S) zur Fehlerbestimmung auswertet, wobei
- ein fehlerfreier Zustand bestimmt wird, wenn das Signal einen vorgegebenen zeitlichen Verlauf (I) aufweist, und
- ein fehlerhafter Zustand bestimmt wird, wenn das Signal von dem vorgegebenen zeitlichen Verlauf abweicht.

2. PV-Wechselrichter nach Anspruch 1, **dadurch gekennzeichnet, dass**
- der Kuppelschalter im fehlerhaften Zustand eine Netzabschaltung bewirkt.

3. PV-Wechselrichter nach Anspruch 1 oder 2, **dadurch gekennzeichnet, dass**
- die Fehlersignal-Auswerteeinheit das am Steuer-Eingang anstehende Signal zur Detektion des Vorhandenseins des externen NA-Schutzes auswertet, wobei das Vorhandensein des externen NA-Schutzes detektiert wird, wenn das Signal den vorgegebenen zeitlichen Verlauf aufweist.

4. Kuppelschalter-loser externer NA-Schutz (5), aufweisend:
- einen Steuer-Ausgang (6) zum Koppeln mit einem korrespondierenden Steuer-Eingang (3a, 3b) eines vom NA-Schutz getrennten PV-Wechselrichters (1a, 1 b) nach einem der Ansprüche 1 bis 3,
**dadurch gekennzeichnet, dass**
- der NA-Schutz am Steuer-Ausgang ein Signal (S) ausgibt, das einen Fehler-Zustand kodiert, wobei
- in einem fehlerfreien Zustand das Signal den vorgegebenen zeitlichen Verlauf (I) aufweist und
- in einem fehlerhaften Zustand das Signal einen zeitlichen Verlauf aufweist, der von dem vorgegebenen zeitlichen Verlauf abweicht.

5. NA-Schutz nach Anspruch 4, **dadurch gekennzeichnet, dass**
- während des vorgegebenen zeitlichen Verlaufs für den fehlerfreien Zustand das Signal abwechselnd einen High-Pegel und einen Low-Pegel aufweist.

6. Photovoltaik(PV)-System, aufweisend:
- einen PV-Wechselrichter (1a, 1b) nach einem der Ansprüche Anspruch 1 bis 3 und
- einen vom PV-Wechselrichter getrennten externen Kuppelschalter-losen NA-Schutz (5) nach Anspruch 4 oder 5.
